# EUROPEAN PATENT APPLICATION

(11) **EP 2 418 292 A1**
(43) Date of publication of application: **15.02.2012**
(21) Application number: 10761707.8
(22) Date of filing: 06.04.2010
(51) Int. Cl.: C21B 13/10, C21B 11/08

(54) **METHOD FOR PRODUCING METALLIC IRON**

(30) Priority: 07.04.2009 JP 2009093242
(71) Applicant: Hino, Mitsutaka, Hokkaido 047-0261 (JP); Kabushiki Kaisha Kobe Seiko Sho, Chuo-ku Kobe-shi Hyogo 651-8585 (JP)
(72) Inventor: The designation of the inventor has not yet been filed
(74) Representative: Müller-Boré & Partner Patentanwälte
(86) International application number: PCT/JP2010/056266
(87) International publication number: WO 2010/117008

(57) **Abstract**

The present invention provides a method for producing metallic iron, which is operable at low temperature. The present invention relates to a method for producing a metallic iron, which comprises heating and reducing a raw material mixture containing a carbonaceous reducing agent and an iron oxide-containing material to produce the metallic iron, wherein the carbonaceous reducing agent has a volatile content of 20 to 60 mass %, a gas derived from the carbonaceous reducing agent is a CO-CO₂-H₂ gas, and the method comprises forming solid Fe₃C by heating the raw material mixture in an atmosphere containing the CO-CO₂-H₂ gas, melting the Fe₃C, and carburizing a reduced iron through the molten Fe₃C.

## Description

### [Technical Field]

The present invention relates to a technique for producing metallic pig iron by heating mixed pellets of iron oxide such as an iron ore and a carbonaceous reducing agent such as coal and reducing the iron oxide, that is, an improvement in a direct reduction iron-making process, and more particularly, a novel control method is introduced into a metallic iron production process on the basis of a novel finding obtained through mechanism analysis in the above production process in the invention.

### [Background Art]

A direct reduction iron-making process is developing as a next-generation iron-making process that can be carried out in extremely small scale and under energy saving as compared with a blast furnace process, and in recent years, an excellent process called ITmk3 (Iron making Technology Mark Three) has been established. At the present, construction of practical plant and commercialization (for example, utilization as an iron source for electric furnace steel-making) of granular metallic iron (generally called iron nugget) produced by the plant are developed. This process is briefly explained below. Coal that was difficult to be used in a blast furnace process can be used as a carbonaceous reducing agent. Pellets of a mixture obtained by adding iron oxide such as an iron ore to the coal are used as a raw material. A metallic iron shell is formed and grown on the pellets by reducing the iron oxide using a reducing gas derived and formed from the carbonaceous reducing agent in the pellets. Reduction is further advanced under a solid state until the iron oxide is not substantially present in the pellets. Heating is further continued, and slag by-produced inside the pellets is flown out of the metallic iron shell.

The thus obtained metallic iron and slag are cooled and solidified. Metallic iron in the form of particles are separated using a magnetic separator or a sieve while the slag is ground, or the metallic iron and slag are melted by heating, followed by separation into pig iron and slag using the difference in specific gravity. As a result, metallic iron having a high purity of 95 mass % or more, and further 98 mass % or more can be obtained as a high-purity product.

When the above process is carried out, the molten slag present inside the metallic iron shell is flown out by further heat-melting the metallic iron shell formed by heating and reducing. In order to melt the metallic iron shell at low temperature as possible from the standpoint of energy saving, it is desired that the melting point of the metallic iron shell is decreased by dissolving carbon into crystal lattices of iron constituting the metallic iron shell (this phenomenon may simply be called "carburization" in some cases), thereby forming iron having a large carbon content.

In relation to the above iron-making process, the present inventors previously proposed the methods described in Patent Document 1 and Patent Document 2, and thereafter are advancing improvement study of a direct reduction iron-making process.

The technique described in Patent Document 1 relates to a method having a gist that in producing metallic iron by heating, reducing and melting the above raw material mixture in the form of pellets, carburization into a metallic iron shell is accelerated by controlling a liquid fraction in the solid-liquid coexisting phase of the produced slag containing multi-component gangue, thereby the melting point of the metallic iron is decreased. In conventional techniques prior to this method, a control method of adjusting basicity of by-product slag has been proposed from the standpoint of a melting point when the whole gangue components derived from an iron ore or the like are melted. However, it was confirmed by the method of Patent Document 1 that a role of a liquid phase partially present in the produced slag is expected, and if the state that all slag is melted is not formed, and the state of coexisting the slag having increased liquid fraction together with a carbonaceous reducing agent is formed by partially liquefying the slag, carburization into the metallic iron shell as a solid efficiently advances. The mechanism is considered that by increasing the liquid fraction when the slag became a solid-liquid coexisting state, the liquid phase part exhibits a carrier-like effect, and carbon-containing molten iron obtained by melt-reducing iron oxide in the liquid phase slag with a carbonaceous reducing agent wets the surface of solid-state metallic iron and is contacted therewith, thereby carburization is accelerated.

Patent Document 2 is the same in the point of focusing on the above produced slag, but the basic concept is a method having a gist to control the temperature of formation of initial molten slag in the initial stage of the temperature-rising process in the slag. The temperature of formation of the initial molten slag in this method is a value determined from a multi-component equilibrium diagram composed of three components of a gangue component in an iron ore present in raw material mixture pellets, ash in a carbonaceous reducing agent, and iron oxide which is a component in the stage during reduction or which is an unreduced component. In other words, in the conventional direct reduction iron-making process, it was one of index to advance reduction in a solid state until iron oxide is not substantially present in pellets. In this method, it is intended to control by applying the state of residual unreduced iron oxide into a multi-component equilibrium diagram. In this method, unreduced iron oxide melts to form slag, the slag is reduced by carbon to form carbon saturation iron, and the carbon saturation iron acts as a carrier of carbon, thereby accelerating carburization.

As the control target in the practical embodiment of Patent Document 2, the target carbon concentration of iron oxide finally obtained is set up, and the temperature of formation of the initial molten slag is determined based on the above multi-component equilibrium diagram. If necessary, the temperature of formation of the initial molten slag can be controlled by further adding other gangue components. In this method, the result that the initial melting temperature of the slag can be controlled low is obtained, and this permits to carry out the operation at lower temperature. As a result, the advantages are obtained that carburization at lower temperature is advanced, thereby a melting point of iron oxide can quickly be decreased, this permits to contribute to energy saving of the overall operation, and additionally by controlling carbon concentration, quality of the product of metallic iron can be adjusted by carbon content.

### [Prior Art References]

### [Patent Document]

[Patent Document 1] JP-A-2005-048197
[Patent Document 2] JP-A-2007-191736

### [Summary of the Invention]

### [Problems that the Invention is to Solve]

As a result of further investigations on the above carburization process, the assumption that gas carburization and carburization through molten iron oxide play a main role was the fundamental concept, but as a result of further investigations on dynamic mechanism about a direct reduction process, the present inventors have reached to deepen the recognition that it is necessary to establish a control method emphasizing a step of carburization by Fe₃C as a new standpoint. The present inventors have further advanced investigations on a method to control carburization by Fe₃C. As a result, the present inventors have conceived a method capable of controlling carburization according to a grade of coal used, and have reached to complete the present invention.

That is, the present invention focuses on a carbonaceous reducing agent that contributes to formation of Fe₃C, specifically focuses on gas components such as CO, CO₂ and H₂ derived from a carbonaceous reducing agent, with the finding of mechanism of carburization by Fe₃C, and as a result, the present invention has an object to establish a specific method that can control carburization.

### [Means for Solving the Problems]

A gist of the present invention is described below.
(1) A method for producing a metallic iron, which comprises heating and reducing a raw material mixture containing a carbonaceous reducing agent and an iron oxide-containing material to produce the metallic iron,
   wherein the carbonaceous reducing agent has a volatile content of 20 to 60 mass %,
   a gas derived from the carbonaceous reducing agent is a CO-CO₂-H₂ gas, and
   the method comprises forming solid Fe₃C by heating the raw material mixture in an atmosphere containing the CO-CO₂-H₂ gas, melting the Fe₃C, and carburizing a reduced iron through the molten Fe₃C.
(2) The method for producing a metallic iron according to (1), wherein as the carbonaceous reducing agent, one kind or two or more kinds of carbonaceous materials are used so that an H₂/CO molar ratio in the CO-CO₂-H₂ gas is 2 to 4.
(3) The method for producing a metallic iron according to (1) or (2), wherein the step of forming solid Fe₃C comprises holding the raw material mixture in a temperature region of 300 to 1147°C for 5 to 60 minutes, and the step of melting the Fe₃C comprises rising temperature at a rate of 100 K/minute or more at least until the heating temperature is achieved to 1250°C.
(4) The method for producing a metallic iron according to any one of (1) to (3), further comprising rising temperature to a temperature region of 1300 to 1500°C after the step of melting the Fe₃C.
(5) The method for producing a metallic iron according to any one of (1) to (4), which comprises forming the CO-CO₂-H₂ gas by vaporizing the volatile content of the carbonaceous reducing agent before the step of forming solid Fe₃C.
(6) The method for producing a metallic iron according to any one of (1) to (5), which comprises adding a solvent to the raw material mixture so that a value of CaO/SiO₂ in a slag by-produced in a course of production of the reduced iron is 0.6 to 1.2.
(7) The method for producing a metallic iron according to any one of(1)to (5), wherein a maximum heating temperature of the raw material mixture is set to lower than a melting temperature of a slag by-produced in a course of production of the reduced iron, the raw material mixture is crushed, and a granular iron is recovered from a mixture of a solid slag and the granular iron by a magnetic separation.
(8) The method for producing a metallic iron according to any one of (1) to (5), wherein the carbonaceous reducing agent is subjected to dry distillation to adjust the volatile content to 20 to 60 mass% before the preparation of the raw material mixture.

### [Advantage of the Invention]

The present invention is improved such that a variety of carbonaceous materials can be used as compared with the conventional method, reduction operation is possible at an operation temperature lower than that of the conventional method, iron oxide is efficiently reduced to metallic iron, carburization is progressed, high-carbon metallic iron formed is efficiently separated from a slag at lower temperature side, and metallic iron having controlled carbon concentration can be produced in high yield.

### [Brief Description of the Drawings]

[Fig. 1] Fig. 1 is a schematic process explanatory view illustrating a moving hearth type heating reduction furnace.
[Fig. 2] Fig. 2 is a graph showing the relationship between P_{H2}/P_{CO} and a mass ratio of products from a raw material mixture.
[Fig. 3] Fig. 3 is a graph showing Fe-C-H-O metastable phase.
[Fig. 4] Fig. 4 is a graph showing the relationship between reaction time of a raw material mixture and melting initiation temperature and the like of reduced iron.
[Fig. 5] Fig. 5 is a graph showing the relationship between reaction time of a raw material mixture and melting initiation temperature and the like of reduced iron.
[Fig. 6] Fig. 6 is a graph showing the relationship between a melting temperature of reduced iron and total carbon amount in a form of Fe-C binary phase diagram.
[Fig. 7] Fig. 7 is a graph showing an iron-carbon stable and metastable diagram.

### [Mode for Carrying Out the Invention]

The present invention is based on a technique of producing metallic iron by heating a raw material mixture of iron oxide such as iron ore and a carbonaceous reducing agent such as coal and reducing the iron oxide, that is, a direct reduction iron-making process, and is particularly **characterized in that** Fe₃C is efficiently formed from a raw material mixture by controlling a volatile content of the carbonaceous reducing agent, thereby improving carburization rate into reduced iron through the Fe₃C.

Specifically, the invention relates to a method for producing a metallic iron, (1) which comprises heating and reducing a raw material mixture containing a carbonaceous reducing agent and an iron oxide-containing material to produce the metallic iron, wherein (2) the carbonaceous reducing agent has a volatile content of 20 to 60 mass %, (3) a gas derived from the carbonaceous reducing agent is a CO-CO₂-H₂ gas, and (4) the method comprises forming solid Fe₃C by heating the raw material mixture in an atmosphere containing the CO-CO₂-H₂ gas, melting the Fe₃C, and carburizing a reduced iron through the molten Fe₃C. Hereinafter, the details are described in the order of(1)to (4).

### (1) Method for producing metallic iron by heating and reducing raw material mixture

In the method for producing metallic iron of the present invention, the raw material mixture containing a carbonaceous reducing agent and an iron oxide-containing material is a direct mixed powder of the carbonaceous reducing agent and the iron oxide-containing material, or is a material agglomerated by agglomeration means described below. As the agglomeration means, press machines such as a briquetting press machine (cylinder press, roll press, ring roller press and the like) are used, and besides, various conventional instruments such as an extrusion molding machine and a tumbling granulator (pan pelletizer, drum pelletizer and the like) can be used.

The shape of agglomerate is not particularly limited, and various shapes such as bulk shape, granular shape, briquette shape, pellet shape and rod shape can be employed.

Granular metallic iron is produced by reducing and melting the agglomerate. Specific reduction melting method is not particularly limited, and the conventional reduction melting furnace can be used. Hereinafter, the case of producing granular metallic iron using a moving hearth type heating reduction furnace is exemplified, but the reduction melting method is not limited to this case.

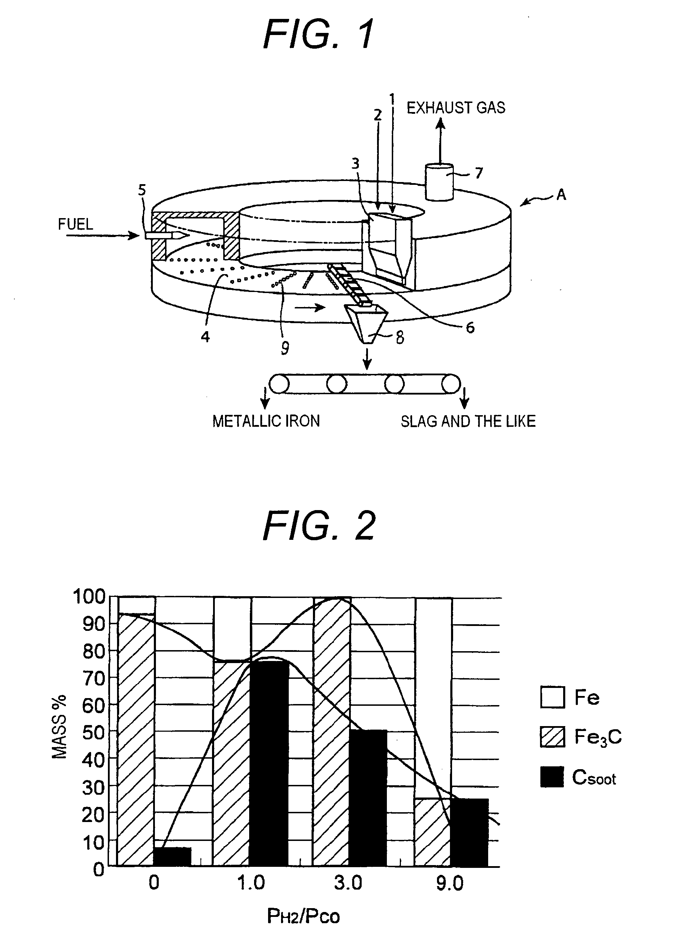

Fig. 1 is a schematic process explanatory view illustrating a moving hearth type heating reduction furnace, and shows a rotary hearth furnace. In a rotary hearth type heating reduction furnace A, the agglomerate 1 and preferably a granular carbonaceous material 2 supplied as a floor material are continuously charged on a rotary hearth 4 through a raw material introduction hopper 3. In more detail, prior to charging the agglomerate 1, the granular carbonaceous material 2 is charged from the raw material introduction hopper 3 and spread to cover the rotary hearth 4, and the agglomerate 1 is charged thereon. The example shown in Fig. 1 indicates an example that one raw material introduction hopper 3 is used to charge both the agglomerate 1 and the carbonaceous material 2, but, of course, those can be charged using 2 or more hoppers.

The carbonaceous material 2 charged as a floor material is extremely effective to increase reduction efficiency and additionally to adjust a reducing atmosphere near the granular metallic iron obtained, thereby promoting low sulfurization. However, as the case may be, the carbonaceous material 2 may not be used.

The rotary hearth 4 of the rotary hearth type heating reduction furnace A shown rotates in the counterclockwise direction, and goes into a 360-degree roll in about 10 to 20 minutes, although varying depending on the operation conditions. During the rotation, iron oxide contained in the agglomerate 1 is solid-reduced, and simultaneously forms Fe₃C. Although the details are described hereinafter, when Fe₃C melts by rising temperature, the molten Fe₃C carburizes reduced iron together with the residual carbonaceous reducing agent, a melting point is decreased, thereby agglomerating in granular form, and in addition to this, granular metallic iron is obtained by separating from by-product slag. That is, a plurality of a combustion burner 5 are arranged on the upper side wall and/or ceiling part of the rotary hearth 4 in the reduction furnace A, and heat is supplied to the hearth part by combustion heat of the combustion burner 5 or its radiation heat.

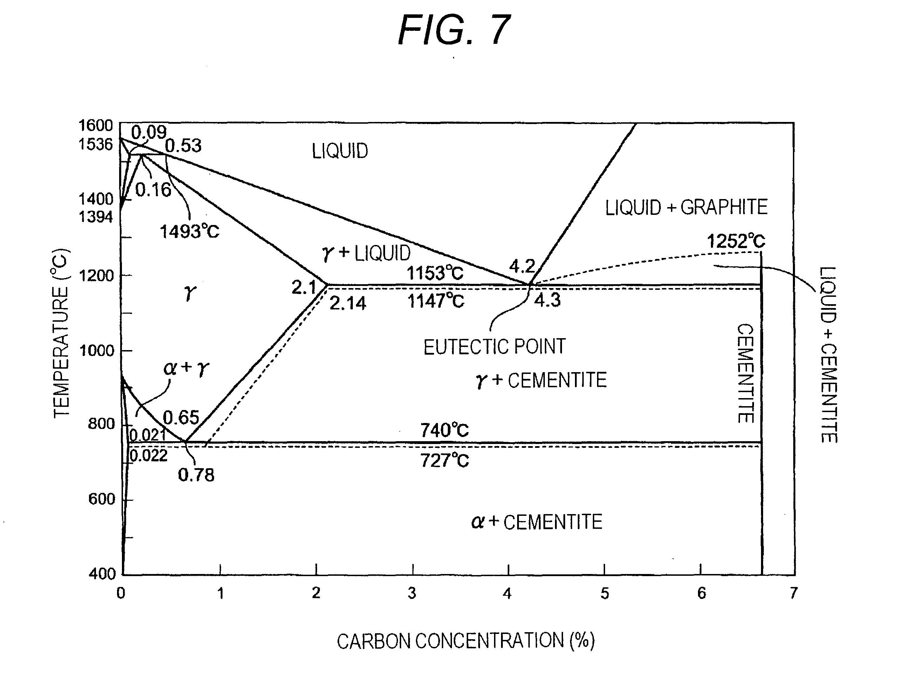

The agglomerate 1 charged on the rotary hearth 4 constituted of a refractory material is heated with combustion heat and radiation heat from the combustion burner 5 on the furnace bed 4 during moving in a circumferential direction in the reduction furnace A. During passing through a heating zone in the reduction furnace A, iron oxide in the agglomerate 1 is solid-reduced and carburized, and then agglomerated in granular form to form a granular metallic iron 9, while separating from by-product molten slag and softening by receiving carburization with the residual carbonaceous reducing agent. The granular metallic iron 9 is cooled and solidified in a downstream side zone of the rotary hearth furnace 4 and then discharged from the hearth by a discharge apparatus 6 such as a screw. In Fig. 1, 7 indicates an exhaust gas dust, and 8 indicates a hopper.

When heating reduction on the rotary hearth is advanced and reduction of iron oxide in the agglomerate is almost completed, reduced iron having high iron purity corresponding to pure iron is formed. Reduced iron particles formed in the heating reduction step are rapidly carburized with molten Fe₃C (the details are described below) formed in the agglomerate and the residual carbonaceous reducing agent. A melting point is greatly decreased with increasing the amount of "C" in the reduced iron, and melting is initiated at 1,147°C. In further heating (for example, 1,300 to 1,500°C), fine particles of the reduced iron are mutually aggregated, and large granular metallic iron is finally formed. In the melting-aggregation process, a slag-forming component contained in the agglomerate melts, and separates from granular metallic iron while mutually aggregating. Even though aggregation is not always advanced and large granular metallic iron is not formed, a mixture cooled and solidified in a form of small metallic iron particles together with slag is cracked (crushed), and the small metallic iron particles may be recovered by magnetic separation.

### (2) Volatile content is 20 to 60 mass %

To generate CO-CO₂-H₂ gas effectively contributing to the formation of Fe₃C, a material having a volatile content is used as a carbonaceous reducing agent. To effectively exhibit such an effect of the CO-CO₂-H₂ gas, it is necessary that the carbonaceous reducing agent has a volatile content of 20 mass % or more. The lower limit of the volatile content is preferably 25 mass % or more, and more preferably 30 mass % or more. On the other hand, where the volatile content is too large, reduction efficiency is decreased. Therefore, the upper limit of the volatile content is, for example, preferably 60 mass %, more preferably 55 mass % or less, and further preferably 50 mass % or less. As the carbonaceous reducing agent, one kind of a carbonaceous material satisfying the above volatile content may be used, and the volatile content can be adjusted by mixing two or more kinds of carbonaceous materials (for example, bituminous coal and brown coal) having different volatile contents.
When a carbonaceous material having a high volatile content is used, at least a part thereof may be charged into a dry distillation furnace to perform dry distillation to adjust its volatile content so as to have 20 to 60 mass % before the preparation of the raw material mixture.

### (3) CO-CO₂-H₂ gas

(a) As described above, the CO-CO₂-H₂ gas effectively contributes to the formation of Fe₃C, and is used as an atmosphere gas in the production process of metallic iron. In the present invention, the CO-CO₂-H₂ gas means a gas containing CO gas, CO₂ gas and H₂ gas in the total amount of 95 mol% or more. The total amount of CO gas, CO₂ gas and H₂ gas is preferably 98 mol% or more, and more preferably 99 mol% or more.

As a result that the present inventors conducted various experiments using not only the CO-CO₂-H₂ gas, but CO gas and CO-CO₂ gas, the formation of Fe₃C was confirmed even in the use of those gases, but formation efficiency of Fe₃C was not good as compared with the case of using the CO-CO₂-H₂ gas.

(b) According to the present inventors' investigations, it was clarified that to further efficiently form Fe₃C, a molar ratio (H₂/CO) between H₂ gas and CO gas in the CO-CO₂-H₂ gas is preferably adjusted to a given range. Fig. 2 is the experimental results that in the atmosphere in which a raw material mixture containing a carbonaceous reducing agent and an iron oxide-containing material is placed, H₂ gas and CO gas were noted, the relationship between a molar ratio (partial pressure P_{H2} of H₂/particial pressure P_{CO} of CO) and a mass ratio of products (Fe, Fe₃C, Cₛₒₒₜ (soot)) from the raw material mixture. The temperature condition is 900 [K] (627 [°C]).

As is seen from Fig. 2, regarding formation proportion of soot, the proportion is largest when the value of P_{H2}/P_{CO} is 1. Regarding the formation behaviors of Fe₃C in which C content is very high as 6.7 mass %, it was considered from the general standpoint that the behaviors show the same tendency as the formation of soot. However, unexpectedly, the maximum formation proportion of Fe₃C was obtained not when the value of P_{H2}/P_{CO} is 1, but when the value is 3 which is 2 points higher than 1. From the above fact, Fe₃C can be formed with high efficiency if at least the value of P_{H2}/P_{CO} is 2 to 4. To control the partial pressure in the reducing atmosphere as above, one kind of a carbonaceous material in which the volatile content is satisfied with the above conditions of partial pressure, or a mixture of two or more kinds of carbonaceous materials (for example, bituminous coal and brown coal) having different volatile contents, can be used.

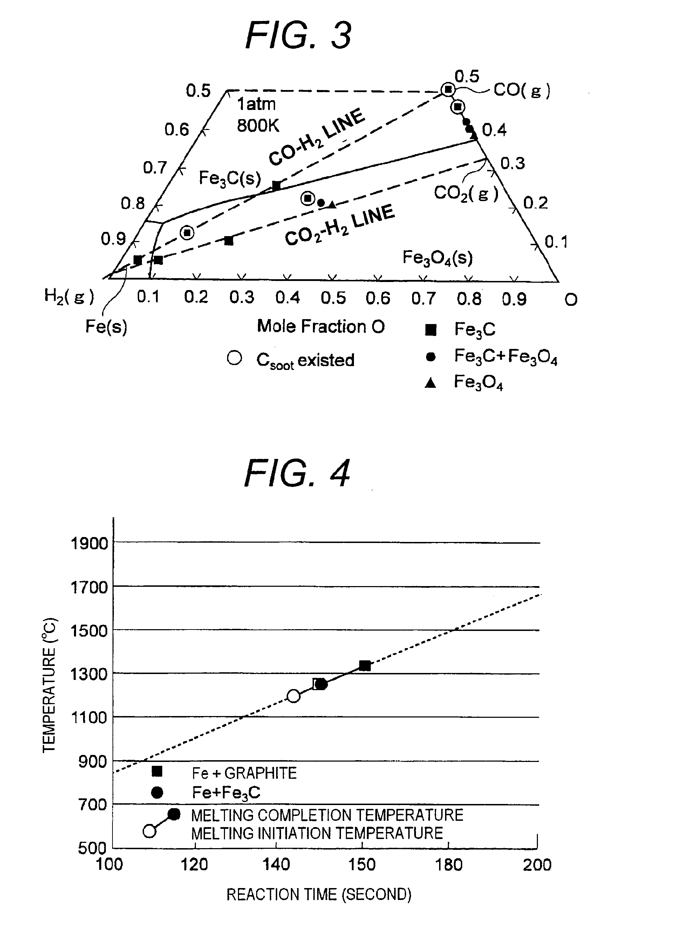

The reason that the above range is defined using a partial pressure of CO gas out of CO gas and CO₂ gas is as follows. CO₂ gas can be formed from oxygen contained in a carbonaceous reducing agent. However, the amount of CO₂ gas is large, CO₂ gas acts in a direction of inhibiting the reduction from Fe₂O₃ to Fe₃O₄, that is, CO₂ gas acts in a direction of inhibiting the formation of Fe₃O₄. Fig. 3 is a view showing Fe-C-H-O metastable phase (pressure 1.013x10⁵ [Pa], temperature 800 [K]). The left side of Fig. 3 shows a content ratio of H₂, the right side thereof shows a content ratio of oxygen, and the upper side thereof shows a content ratio of carbon although not shown. As is seen from Fig. 3, the vicinity of CO-H₂ line (broken line) is a stable region of Fe₃C formation, but the vicinity of CO₂-H₂ line (broken line) is fundamentally a stable region of magnetite (Fe₃O₄), and when H₂ concentration is increased, formation of Fe₃C becomes possible from the standpoint of kinetics. However, it is found that CO₂ gas does not almost contribute to the formation of Fe₃C.

When a large amount of CO₂ gas is present in the reducing atmosphere, CO gas is diluted by the CO₂ gas. However, according to the present inventors' investigations, even in the case that the atmosphere temperature is 800K and even in the case that the atmosphere temperature is 900K, Fe₃C could be produced when a gas amount ratio H₂/(CO+CO₂) is 1 even though the partial pressure P_{CO}/(P_{CO}+P_{CO2}) of CO gas was decreased to 0.4. It is confirmed that when hydrogen is added to increase the gas amount ratio to H₂/(CO+CO₂)=3.9, Fe₃C is formed without depending on the proportion of CO and CO₂. This fact means that when H₂ is present in the reducing atmosphere, Fe₃C is formed even though CO₂ is present in some amount, that is, the partial pressure P_{CO}/(P_{CO}+P_{CO2}) of CO gas is decreased.

### (4) Formation of solid Fe₃C, melting of Fe₃C and carburization by Fe₃C

### (4-1) Formation of solid Fe₃C

By heating a raw material mixture containing a carbonaceous reducing agent and an iron oxide-containing material in a reduction furnace or the like, solid Fe₃C is formed from the iron oxide-containing material. As the formation condition of Fe₃C, the raw material mixture is preferably heated to a temperature region of, for example, 300 to 1,147°C. The raw material mixture is preferably held in the temperature region for 5 minutes or more as a target of the completion of vaporization of volatile components, and, for example, for 60 minutes or less from the standpoint of a production efficiency (it is not necessary to maintain a constant temperature, and temperature is maintained in the above temperature region). The lower limit of the temperature condition is more preferably 400°C, and further preferably 500°C, and the upper limit thereof is more preferably 1,100°C, further preferably 1,000°C, and still more preferably 900°C. The lower limit of the holding time is more preferably 10 minutes, and further preferably 15 minutes, and the upper limit thereof is more preferably 40 minutes, and further preferably 30 minutes.
A step for removing the volatile contents from the carbonaceous reducing agent may be separately conducted prior to the step of forming solid Fe₃C. The efficient formation of solid Fe₃C can be ensured by the generation of CO-CO₂-H₂ gas in a furnace zone having a temperature held at a level suited for the vaporization of the volatile content.

### (4-2) Melting of Fe₃C and carburization by molten Fe₃C

It was found that when the raw material mixture containing Fe₃C is then rapidly heated, liquid Fe₃C (molten Fe₃C) is formed even at relatively low temperature (1,250°C). The reason for conducting rapid heating is that when the raw material mixture is heated at low rate, ledeburite eutectic and graphite are precipitated according to Fe-C phase diagram, and liquid Fe₃C required in the present invention may not be obtained. The "rapid heating" means that, as described above, the temperature rises at a rate of, for example, 100 K/min or more (preferably 200 K/min or more, and more preferably 300 K/min or more).

The reason that the present inventors could confirm that molten Fe₃C is present in the raw material mixture is as follows. When the raw material mixture rapidly heated to 1,250°C was rapidly cooled, Fe₃C was observed in a solid. When the raw material mixture is slowly cooled, cash graphite is precipitated according to Fe-C phase diagram. Therefore, the composition state of the raw material mixture at 1,250°C cannot be estimated.

The heating temperature to melt Fe₃C is preferably 1,250°C or higher. To further surely melt Fe₃C, the heating temperature is preferably 1,260°C or higher, and more preferably 1,270°C or higher. On the other hand, from the standpoint of melting of Fe₃C, an achieving temperature region does not particularly have the upper limit, but when the temperature reaches about 1,350°C, Fe₃C sufficiently melts. Period during the state that the temperature in a reducing atmosphere is 1,250°C or higher is, for example, 5 to 30 minutes, and preferably 10 to 20 minutes, from the standpoint of sufficient progress of reduction reaction and carburization.

To accelerate aggregation by the melting of reduced iron, a step of further heating at 1,300°C or higher (preferably 1,320°C or higher, and more preferably 1,340°C or higher), after melting Fe₃C, may be added. Even in this case, the final achieving temperature is preferably 1,500°C or lower (preferably 1,450°C or lower, and more preferably 1,400°C or lower) from the standpoint of production efficiency. In this case, when a solvent (for example, limestone, hydrated lime or dolomite) is added to the raw material mixture so that the value of CaO/SiO₂ in a slag by-produced in the course of the production process of reduced iron is 0.6 to 1.2, a melting point of the slag can be decreased, and aggregation of reduced iron is accelerated. As a result, large drops of metal particles can efficiently be obtained.

On the other hand, a method in which the final heating temperature of the raw material mixture is lower than the melting temperature of the slag by-produced in the course of the production process of reduced iron, metal particles are cooled and solidified in a form of small particles, and small iron particles (granular iron) are recovered from a mixture of a solid slag and small iron particles (granular iron) by magnetic separation as described above can be selected.

To efficiently form molten Fe₃C, the rate of heating is, for example, 100 K/min or more (preferably 200 K/min or more, and more preferably 300 K/min or more). The upper limit is not particularly limited, but is, for example, 500 K/min or less from the standpoint of the practical.

As described above, to realize facilities for achieving the step of holding the raw material mixture at 300 to 1,147°C for a certain period of time and the step of rising the temperature to the temperature region of 1,300 to 1,500°C, a multi-chamber structure having different temperature is arranged in a reduction furnace such as a vertical furnace, a tunnel furnace and a rotary hearth furnace (RHF) by a partition plate or the like, and a method of forming temperature distribution in a reaction furnace by a position of a combustion burner or temperature control is used.

More specifically, the reduction furnace can have facility constitutions such that (A) a partition plate is arranged in RHF to form a multi-chamber structure, thereby providing temperature distribution, (B) temperature distribution is provided in a linear furnace such as a tunnel furnace, (C) temperature distribution is provided in an axial direction of a furnace by temperature control of a combustion burner in a rotary furnace such as a rotary kiln, and (D) temperature distribution is provided in a height direction in a vertical furnace such as a shaft furnace.

Furthermore, without using the multi-chamber structure, a plurality of furnaces are arranged in series, and a furnace that holds the raw material mixture in a temperature region of 300 to 1,147°C for a certain period of time and a furnace that rises the temperature to a temperature region of 1,250°C or higher, and further 1,300 to 1,500°C, can separately be arranged.

When liquid Fe₃C is formed in the raw material mixture, a melting initiation temperature of reduced iron is decreased, and various effects such as energy saving by operation at low temperature and improvement in productivity are brought about. The reason that the melting initiation temperature of reduced iron is decreased is considered that carburization of reduced iron rapidly progresses by molten Fe₃C.

In view of the above, the present inventors further conducted investigations, and examined the influence of Fe₃C(s) to carburization into Fe(s). A mixed sample A of Fe(s) and Fe₃C(s) and a mixed sample B of Fe(s) and graphite(s) were used. The temperature of both samples was rised at a rate of 500 K/min, and a melting initiation temperature and a complete melting temperature (melting completion temperature) of those samples were measured. The expression "(s)" means a solid.

### (i) Investigation 1

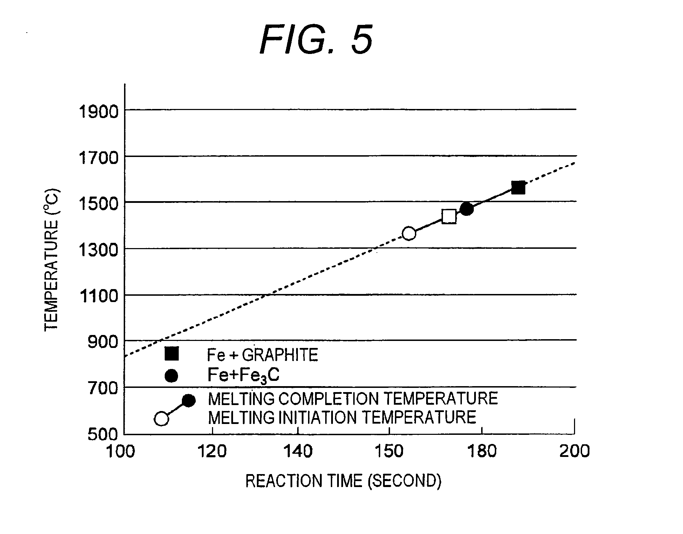

Fig. 4 and Fig. 5 are graphs showing the relationship between the reaction time of both mixed samples and the melting initiation temperature and melting completion temperature of reduced iron. The difference between Fig. 4 and Fig. 5 is that Fig. 4 uses a mixed sample having the total carbon amount (T.C) of 4.3 mass % and Fig. 5 uses reduced iron having the total carbon amount of 2.0 mass %. It was found that even in either of Fig. 4 and Fig. 5, the mixed sample A of Fe(s) and Fe₃C(s) has the melting initiation temperature and melting completion temperature of reduced iron lower than those of the mixed sample B of Fe(s) and graphite(s).

### (ii) Investigation 2

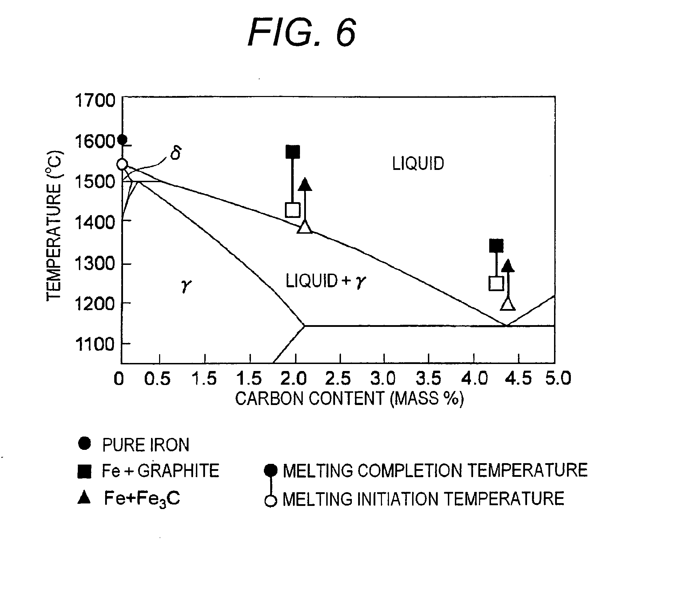

Fig. 6 is a graph showing the relationship between the total carbon amount in the mixed samples A and B and the melting temperature of reduced iron in a form of Fe-C binary phase diagram. The Fe-C binary phase diagram also shows that the mixed sample A of Fe(s) and Fe₃C(s) has the melting initiation temperature and melting completion temperature of reduced iron lower than those of the mixed sample B of Fe(s) and graphite(s).

### (iii) Investigation 3

Considering lever relation in an iron-carbon stable and metastable diagram (Fig. 7), it is considered that a large amont of Fe₃C(s) is Fe-C melt, and a small amount of C crystallizes. Therefore, it is considered that a solid-liquid carburization reaction proceeds between Fe(s) and Fe-C melt after incongruent melting of Fe₃C(s) in the mixed sample A. A carburization rate between Fe(s) and Fe-C melt is faster than the carburization rate between Fe(s) and graphite(s), and consequently in the case of the mixed sample A of Fe(s) and Fe₃C(s), the carburization rate becomes fast by the Fe-C melt formed by incongruent melting of Fe₃C(s). As a result, it is considered that the melting temperature of reduced iron is decreased as compared with the mixed sample B of Fe(s) and graphite (s).

In the present invention, the formation amount of Fe₃C does not have particular requirement. However, the production of metallic iron having high carbon concentration by carburization permits to freely adjust carbon concentration of a final product by mixing with other metallic iron having low carbon concentration in an electric furnace or the like.

The gas derived from the volatile content in the carbonaceous material is discharged from the reduction furnace A through the exhaust duct 7 after it has contributed to the formation of solid Fe₃C. However, if the gas has a high calorific value, its secondary combustion may be useful for supplying the heat required for melting solid Fe₃C. If such is the case, the gas is not discharged from the reduction furnace A after the formation of solid Fe₃C, but can be discharged after its secondary combustion for melting solid Fe₃C.
When the gas derived from the volatile content in the carbonaceous material is discharged from the reduction furnace A, or when the volatile content is removed from the carbonaceous material in the dry distillation furnace as mentioned above, such volatile content may be collected for subsequent use. For example, the collected volatile content can be supplied into the reduction furnace A as a source of hydrogen for the furnace atmosphere. It can alternatively be used as a fuel for the burners in the reduction furnace A or dry distillation furnace. It can also be used as a fuel for a power generator and the like in metallic iron manufacturing facility including the reduction furnace A

### [Examples]

Hereinafter, the present invention is described in detail with reference to examples. However, of course, the present invention is not limited to the following examples and may be performed with optionally making modifications within the scope which is described above and below, and these are also included in the technical scope of the present invention.

A carbonaceous reducing agent and a magnetite ore were mixed to prepare a sample of a raw material mixture, and examples of producing metallic iron by variously changing operation conditions are shown below. The carbonaceous reducing agents used are specifically AK9 (Yakut K9 coal, produced in Russia) which is bituminous coal and A brown coal #1 (Suek brown coal, produced in Russia) which is a coal having a high volatile content. Industrial analysis of those is shown in Table 1, and elemental analysis results are shown in Table 2. In Table 1, "VM" indicates a volatile content (mass %), "Ash" indicates an ash component (mass %), "S" indicates sulfur (mass %), and "T.C" indicates total carbon (total carbon amount: mass %). Table 2 shows contents of the respective elements in mass %.

**[Table 1]**

| Product name | VM | Ash | S | T.C |
|---|---|---|---|---|
| | (mass %) | (mass %) | (mass %) | (mass %) |
| A brown coal #1 | 49.05 | 5.52 | 0.347 | 62.48 |
| AK9 coal | 17.49 | 10.27 | 0.255 | 82.88 |

**[Table 2]**

| | C | H | N | O |
|---|---|---|---|---|
| | (mass %) | (mass %) | (mass %) | (mass %) |
| A brown coal #1 | 66.48 | 4.80 | 0.71 | 22.2 |
| AK9 coal | 81.24 | 4.14 | 0.81 | 3.38 |

The raw material mixture was prepared by blending an ore, a carbon material, a flux and a binder as shown in Table 3. A mixture of limestone, dolomite and fluorite was used as the flux, and an organic material binder was used as the binder. Numerical values in Table 3 are indicated in mass %.

**[Table 3]**

| Sample name | Ore | Carbon material | | Flux (mass %) | Binder (mass %) |
|---|---|---|---|---|---|
| | Magnetite | A brown coal #1 | AK9 coal | | |
| | (mass %) | (mass %) | (mass %) | | |
| S1 | 69.57 | 0.00 | 16.56 | 13.0 | 0.90 |
| S2 | 64.28 | 24.62 | 0.00 | 9.6 | 1.50 |

The results of producing metallic iron particles by changing production temperature and compounding materials are shown in Table 4 below (Test Nos. 1 to 4). Even in the case of using A brown coal #1 having a large volatile content (Test Nos. 2 to 4), product yield and product quality (C content: mass %) in the same level as the conventional case of using bituminous coal AK9 (Test No. 1) could be obtained. The product yield [%] was calculated by "100x(mass (g) of nugget of metallic iron recovered)/(amount (g) of iron component introduced)", and "90% or more" was considered to be acceptable. In Test Nos. 3 and 4, even though the operation temperature (maximum achieving temperature) was decreased to 1,400°C and 1,350C, respectively, good product yield and product quality could be obtained, and feasibility of direct reduction iron-making at a new low temperature region could be proven.
The conditions under which Test No. 2 using A brown coal #1 having a high volatile content was conducted will be explained. The raw material mixture was first placed in the rotary hearth type heating reduction furnace and subjected to the step of removing volatile content from the carbonaceous reducing agent prior to the formation of solid Fe₃C. The step of removing volatile content was carried out by holding a furnace temperature of 620°C for 10 minutes. A reduction ratio of 24.5% was achieved. Then, the raw material mixture was heated in a furnace zone having a temperature of 810°C to form solid Fe₃C. The step of forming solid Fe₃C was carried out by holding for 35 minutes. A reduction ratio of 80.2% was reached. Then, the raw material mixture containing Fe₃C was rapidly heated to 1,300°C and held at that temperature for five minutes, whereby Fe₃C was melted. A reduction ratio of 92.0% was reached. After Fe₃C had been melted, the mixture was heated to 1,450°C and held at that temperature for five minutes, whereby the aggregation of reduced iron was promoted. A reduction ratio of nearly 100% was reached.

**[Table 4]**

| Test No. | Sample | Carbon material | Operation temperature | Product yield | C in product (mass %) |
|---|---|---|---|---|---|
| | | | (°C) | (%) | |
| 1 | S1 | AK9 coal | 1,450 | 102.1 | 3.97 |
| 2 | S2 | A brown coal #1 | 1,450 | 103.5 | 3.54 |
| 3 | S2 | A brown coal #1 | 1,400 | 104.9 | 3.54 |
| 4 | S2 | A brown coal #1 | 1,350 | 105.5 | 3.25 |

While the invention has been described in detail and with reference to specific embodiments thereof, it will be apparent to one skilled in the art that various changes and modifications can be made therein without departing from the spirit and scope thereof. This application is based on Japanese Patent Application No. 2009-093242 filed on April 7, 2009, and their contents are incorporated herein by reference.

### [Industrial Applicability]

The present invention is improved such that a variety of carbonaceous materials can be used as compared with the conventional method, reduction operation is possible at an operation temperature lower than that of the conventional method, iron oxide is efficiently reduced to metallic iron, carburization is progressed, high-carbon metallic iron formed is efficiently separated from a slag at lower temperature side, and metallic iron having controlled carbon concentration can be produced in high yield.

### [Description of Reference Numerals and Signs]

- A: Rotary hearth type heating reduction furnace
- 1: Agglomerate (raw material mixture)
- 2: Carbonaceous material
- 3: Raw material introduction hopper
- 4: Rotary hearth
- 5: Combustion burner
- 6: Discharge apparatus
- 7: Exhaust gas dust
- 8: Hopper
- 9: Granular metallic iron

## Claims

1. A method for producing a metallic iron, which comprises heating and reducing a raw material mixture containing a carbonaceous reducing agent and an iron oxide-containing material to produce the metallic iron,
wherein the carbonaceous reducing agent has a volatile content of 20 to 60 mass %,
a gas derived from the carbonaceous reducing agent is a CO-CO₂-H₂ gas, and
the method comprises forming solid Fe₃C by heating the raw material mixture in an atmosphere containing the CO-CO₂-H₂ gas, melting the Fe₃C, and carburizing a reduced iron through the molten Fe₃C.

2. The method for producing a metallic iron according to claim 1, wherein as the carbonaceous reducing agent, one kind or two or more kinds of carbonaceous materials are used so that an H₂/CO molar ratio in the CO-CO₂-H₂ gas is 2 to 4.

3. The method for producing a metallic iron according to claim 1, wherein the step of forming solid Fe₃C comprises holding the raw material mixture in a temperature region of 300 to 1147°C for 5 to 60 minutes, and the step of melting the Fe₃C comprises rising temperature at a rate of 100 K/minute or more at least until the heating temperature is achieved to 1250°C.

4. The method for producing a metallic iron according to claim 1, further comprising rising temperature to a temperature region of 1300 to 1500°C after the step of melting the Fe₃C.

5. The method for producing a metallic iron according to claim 1, which comprises forming the CO-CO₂-H₂ gas by vaporizing the volatile content of the carbonaceous reducing agent before the step of forming solid Fe₃C.

6. The method for producing a metallic iron according to any one of claims 1 to 5, which comprises adding a solvent to the raw material mixture so that a value of CaO/SiO₂ in a slag by-produced in a course of production of the reduced iron is 0.6 to 1.2.

7. The method for producing a metallic iron according to any one of claims 1 to 5, wherein a maximum heating temperature of the raw material mixture is set to lower than a melting temperature of a slag by-produced in a course of production of the reduced iron, the raw material mixture is crushed, and a granular iron is recovered from a mixture of a solid slag and the granular iron by a magnetic separation.

8. The method for producing a metallic iron according to any one of claims 1 to 5, wherein the carbonaceous reducing agent is subjected to dry distillation to adjust the volatile content to 20 to 60 mass% before the preparation of the raw material mixture.
